# EUROPEAN PATENT APPLICATION

(11) **EP 4 782 517 A1**
(43) Date of publication of application: **29.07.2026**
(21) Application number: 25305096.7
(22) Date of filing: 27.01.2025
(51) Int. Cl.: C09K 11/02, C09K 11/88, C01B 19/00

(54) **ENCAPSULATION METHOD**

(71) Applicant: Nexdot, 93230 Romainville (FR)
(72) Inventor: ALFONSO, Marco, 93230 Romainville (FR); D'AMICO, Michele, 93230 Romainville (FR); DUBERTRET, Benoit, 93230 Romainville (FR); LIN, Yu-Pu, 93230 Romainville (FR); VIDAL, Sébastien, 93230 Romainville (FR)
(74) Representative: Icosa

(57) **Abstract**

The present disclosure relates to a method of encapsulation of nanoparticles in a metal oxide matrix by spraying in which evaporation of solvent and triggering of reaction of formation of oxide matrix are successive in time.

## Description

### FIELD OF DISCLOSURE

The present disclosure relates to a method of encapsulation of nanoparticles in a metal oxide matrix.

### BACKGROUND OF DISCLOSURE

Encapsulating nanoparticles in an inorganic material - especially a metal oxide matrix - is required and can be essential in certain applications such as catalysis, drug-delivery, bio-imaging, bio-assay, displays, paints and varnishes in which harsh conditions may be endured by nanoparticles: deteriorating species such as water, oxygen, acids or bases, harsh conditions, temperature, humidity, light... Indeed, it is known that encapsulating nanoparticles can be useful to build a barrier and prevent alteration of the properties of said nanoparticles. This is especially true for nanoparticles prone to oxidation, such as quantum dots or semi-conductive particles comprising metallic elements. In addition, the nanometric size of such nanoparticles leads to very high specific surface associated with high reactivity with the environment.

Besides, encapsulation conditions should also prevent alteration of the properties of the nanoparticles. For instance, quantum dots or semi-conductive particles comprising metallic elements which are designed to present nanometric size and show quantum properties have specially designed structures and shapes, which do not resist high temperature treatments. Thus, soft conditions for encapsulation are required.

However, soft conditions in encapsulation methods do not lead to efficient barrier properties of capsules.

For instance, it is known to encapsulate nanoparticles in an inorganic material by a method in solution. For example, Koole et al. discloses the encapsulation of hydrophobic CdSe and CdTe quantum dots in silica using a water-in-oil reverse microemulsion method (Chem. Mater. 2008, 20, 2503-2512). In this method, QDs dispersed in chloroform, cyclohexane, or water are added to a solution of cyclohexane comprising a surfactant, typically NP-5. Then, a precursor of silica, typically tetraethyl orthosilicate, and ammonia are added. The mixture is then stirred for 1 min and stored in the dark at room temperature for 1 week. Finally, particles are purified by centrifugation and redispersed in ethanol. However, this microemulsion method may result in porous silica encapsulated quantum dots, and porous silica will not be able to act as an efficient protective layer. This method also results in the partial quenching of the photoluminescence of the quantum dots at every stage of the synthesis, leading to a particle with much poorer optical properties than the original quantum dots. Furthermore, this synthesis method requires a long time of reaction and is difficult to scale up. Lastly, surfactants are used in such a method, which makes the functionalization of the resulting particles difficult.

It is therefore an object of the present disclosure to provide a method of encapsulation for obtaining capsules comprising nanoparticles encapsulated in an inorganic material, whose nanoparticles show enhanced resistance to environment deterioration, enhanced stability over time and/or stability to high temperature. Said method having one or more of the following advantages: preventing alteration of properties of nanoparticles during encapsulation, allowing a fine control of the capsules size, easy and fast to operate, possibility to scale up with a reduced cost.

### SUMMARY

The present disclosure thus relates to a method of encapsulation of nanoparticles in a metal oxide matrix comprising:
- Preparing a dispersion in a non-polar solvent comprising nanoparticles and a metal oxide precursor;
- Spraying said dispersion in a reactor under dry atmosphere to form droplets;
- Evaporating the solvent by heating said droplets;
- Triggering a reaction of the metal oxide precursor with a controlled amount of aqueous vapor in the reactor; and
- Collecting capsules comprising nanoparticles in a metal oxide matrix.

In an embodiment, the dispersion comprises
- From 0.1wt% to 15wt% of nanoparticles,
- From 3wt% to 80wt% of metal oxide precursor, and
- From 5wt% to 97wt% of solvent.

In an embodiment, the dispersion further comprises processing aids such as ligands, anti-agglomerants, cosolvents, dispersing agent, or mixture thereof

In an embodiment, the ratio defined by the mass of nanoparticles divided by the mass metal oxide generated from the metal oxide precursor is in a range from 0.1% to 40%, preferably from 2% to 20%.

In an embodiment, the ratio defined by the mass flow rate of dispersion sprayed divided by the mass flow rate of gas injected for spraying is in a range from 0.1 to 100, preferably from 1 to 50.

In an embodiment, evaporating is performed in a first enclosure, preferably at a temperature in a range from 100°C to 250°C, and triggering a reaction of the metal oxide precursor is performed in a second enclosure, preferably at a temperature in a range from 100°C to 250°C and absolute humidity in a range from 0.5% to 20%.

Alternatively, evaporating and triggering a reaction are performed in a single enclosure with a residence time in the reactor in a range from 0.1 s to 600 s at a temperature in a range from 100°C to 250°C; preferably triggering a reaction is performed with absolute humidity in a range from 0.5% to 20%.

In an embodiment of this alternative, the reaction of the metal oxide precursor releases a volatile compound; and evaporating and triggering a reaction are performed with a partial pressure of said volatile compound less than 50 mbar, preferably less than 5 mbar, more preferably less than 1 mbar.

In an embodiment of this alternative, evaporating and triggering a reaction are performed under a partial pressure of nitrogen greater than 0.95 Patm.

In an embodiment, the method of encapsulation further comprises annealing of capsules with an annealing time in a range from 5 min to 300 min at a temperature in a range from 100°C to 250°C; preferably in a range from 150°C to 220°C. Besides, annealing is preferably performed with absolute humidity in a range from 0.5% to 20%.

### DEFINITIONS

In the present disclosure, the following terms have the following meanings:

**"Absolute humidity"** refers to the mass of aqueous vapor per mass of dry gas. For instance, an absolute humidity of 1% means that 1 kg of nitrogen comprises 10 g of aqueous vapor. In this disclosure, where temperature is always above 100°C and pressure is atmospheric pressure, absolute humidity is directly linked to partial pressure of water, in other words to water activity in the system, governing reaction progress when water is involved as a reactant. An absolute humidity less than 0.1% defines a "dry" gas.

"at%" refers to the atomic percentage of an element in a compound. In this disclosure, the atomic percentage for a metallic element of a metal oxide matrix is given without considering oxygen. For instance, Al₂O₃ contains 100 at% of aluminum as no other metallic element is present in the metal oxide.

"Core/shell" refers to heterogeneous nanostructure comprising an inner part: the core, overcoated on its surface, totally or partially, by a film or a layer of at least one atom thick material different from the core: the shell. Core/shell structures are noted as follows: core material/shell material. For instance, a particle comprising a core of CdSe and a shell of ZnS is noted CdSe/ZnS. By extension, core/shell/shell structures are defined as core/first-shell structures overcoated on their surface, totally or partially, by a film or a layer of at least one atom thick material different from the core and/or from the first shell: the second shell. For instance, a particle comprising a core of CdSe, a first shell of CdS and a second shell of ZnS is noted CdSe/CdS/ZnS. Core/shell nanostructure also include nanoparticles in which the central part: the core, is embedded - or encapsulated - by a layer of material disposed on the core: the shell, said shell having a gradient of composition from the core to the outside of the shell. In this case, the composition of the nanoparticle is changing smoothly - for instance continuously - from the core composition - for instance CdSe - to the outside composition of the shell - ZnS for instance. There is no precise boundary between core and shell but properties in centre of the core are different from properties on the outer boundary of shell. In addition, core and shell may have different shapes, for instance a dot - a nanosphere or a nanocube or any other nanocluster - is provided as a core and shell is grown laterally around the core, yielding an heterostructure with shape of a nanoplate but comprising a dot inside the nanoplate.

**"Encapsulated"** refers to a state in which a material - or a matrix - coats, surrounds, embeds, contains, comprises, wraps, packs, or encloses one or a plurality of nanoparticles. The resulting object is a **capsule:** one or a plurality of nanoparticles encapsulated in a material, here a metal oxide matrix. A capsule is a composite particle.

**"Loading charge"** refers to the mass ratio between the mass of particles comprised in a formulation and the mass of said formulation. For the sake of clarity, 10g of particles mixed with 90g of a matrix defines a loading charge of 10%.

**"Nanometric size"** refers to a size of matter where at least one physical property is directly governed by size. For semi-conductive nanoparticles, nanometric size has to be defined with the average Bohr radius of an electron/hole pair in the material in which quantum effects appear due to confinement. For semi-conductive materials disclosed here, quantum effects appear for size in at least one dimension of the object below 20 nm, preferably below 10 nm, more preferably below 5 nm. For conductive particles, nanometric size has to be defined from the resonance of oscillations of free electron gas density, which becomes relevant for optical measurements in the range from 380 nm to 3 µm for size in at least one dimension of the object below 20 nm for conductive materials disclosed here.

**"Nanoparticle"** refers to a particle having at least one dimension in the 0.1 to 100 nanometers range. Nanoparticles may have any shape. A nanoparticle may be a single particle or an aggregate of several single particles or a capsule comprising single particles dispersed in a matrix. Single particles may be crystalline. Single particles may have a core/shell or plate/crown structure.

**"Nanoplate"** refers to a nanoparticle having a 2D-shape, *i.e.,* having one dimension smaller than the two others; said smaller dimension ranging from 0.1 to 100 nanometers. In the sense of the present disclosure, the smallest dimension (hereafter referred to as the thickness) is smaller than the other two dimensions (hereafter referred to as the length and the width) by a factor (aspect ratio) of at least 1.5.

**"Partial pressure of constituent A":** refers to the contribution of constituent A to the pressure of a mixture of gases. In other words, the partial pressure is pᵢ=xᵢ.P, where xᵢ is the amount fraction x of the i-th constituent and P is the total pressure.

**"PLQY"** refers to photoluminescence quantum yield, *i.e.,* the ratio between the number of fluorescence emitted photons and the number of absorbed exciting photons.

**"Range"** refers to a range of values. Lower limit and upper limit of the range are included in the range.

**"Semi-conductive nanoparticles"** refers to particles made of a material having an electronic structure corresponding to semi-conductive materials known in electronic industry but having a **nanometric size.** Due to their specific electronic structure, semi-conductive materials behave as high-pass absorbing materials. Indeed, light having a wavelength more energetic than band gap may be absorbed by the semi-conductive material, yielding an electron/hole pair, an exciton, which later recombine in the material and dissipate heat, or emit light, or both. On the contrary, light having a wavelength less energetic than band gap cannot be absorbed: semi-conductive material is transparent for these wavelengths. In macroscopic semi-conductive materials, visible light is generally absorbed while near/mid infra-red light is not absorbed. When semi-conductive particles have a **nanometric size,** confinement - *i.e.,* shape and nanometric size - governs electronic structure following the rules of quantum mechanics and light absorption may be limited to UV range or UV and high energy visible light. Within this disclosure, **semi-conductive nanoparticles** absorb light having a wavelength below a threshold, this threshold being in the range of 350 nm - 800 nm.

**"wt%"** refers to the weight percentage of a compound in a formulation or of an element in a compound.

### DETAILED DESCRIPTION

This disclosure relates to a method of encapsulation of nanoparticles in a metal oxide matrix comprising the following steps.

In a first step, a dispersion in a solvent comprising nanoparticles and a metal oxide precursor is prepared. Preferably, the solvent is a non-polar solvent or a polar aprotic solvent.

Various metal oxide precursors may be used, in particular metal alkoxides or organometallics.

Suitable alkoxides are silicon alkoxides, aluminium alkoxides, zirconium alkoxides, titanium alkoxides and optionally other metal alkoxides. Alkoxides may be used alone leading to pure matrix such as SiO₂, Al₂O₃, ZrO₂ or TiO₂; or in mixtures, leading to mixed matrixes such as Al₂ZrO₅ or SiZrO₂ for instance.

Preferred silicon alkoxides are tetramethoxysilane Si(OCH₃)₄ (commonly called methyl silicate) and tetraethoxysilane Si(OC₂Hₛ)₄ (commonly called ethyl silicate) or methyltriethoxysilane.

Preferred aluminum alkoxides are aluminum tert-butoxyde.

Preferred zirconium alkoxides are zirconium tetra propoxide Zr(OC₃H₇)₄, for instance as a solution in 1-propanol.

Preferred titanium alkoxides are titanium tetraisopropoxide Ti(OisoC₃H₇)₄., titanium tetraethoxide or titanium tetrabutoxide.

Suitable organometallics are metallocenes; metal amidinates; metal alkyl halides; metal alkyls such as for example Hf[NMe₂]₄, In[N(SiMe₃)₂]₃, Sn(NMe₂)₂, Sn[N(SiMe₃)₂]₂, Zn[N(SiMe₃)₂]₂ or Zn[(NiBu₂)₂]₂, zinc diethylthiocarbamate, trimethyl aluminium, triisobutylaluminum, trioctylaluminum, triphenylaluminum, dimethyl aluminium, trimethyl zinc, dimethyl zinc, diethylzinc, Zn[(N(TMS)₂]₂, Zn[(CF₃SO₂)₂N]₂, Zn(Ph)₂, Zn(C₆F₅)₂, Zn(TMHD)₂ (β-diketonate), Hf[C₅H₄(CH₃)]₂(CH₃)₂, HfCH₃(OCH₃)[C₅H₄(CH₃)]₂, [[(CH₃)₃Si]₂N]₂HfCl₂, (C₅H₅)₂Hf(CH₃)₂, [(CH₂CH₃)₂N]₄Hf, [(CH₃)₂N]₄Hf, [(CH₃)₂N]₄Hf, [(CH₃)(C₂H₅)N]₄Hf, [(CH₃)(C₂H₅)N]₄Hf, 2,2',6,6'-tetramethyl-3,5-heptanedione zirconium (Zr(THD)₄), C₁₀H₁₂Zr, Zr(CH₃C₅H₄)₂CH₃OCH₃, C₂₂H₃₆Zr, [(C₂H₅)₂N]₄Zr, [(CH₃)₂N]₄Zr, [(CH₃)₂N]₄Zr, Zr(NCH₃C₂H₅)₄, Zr(NCH₃C₂H₅)₄, C₁₈H₃₂O₆Zr, Zr(C₈H₁₅O₂)₄, Zr(OCC(CH₃)₃CHCOC(CH₃)₃)₄, or a mixture thereof. These organometallics may be used alone, leading to pure matrixes such as HfO₂, ZnO, Al₂O₃ or ZrO₂; or in mixtures, leading to mixed matrixes such as Al₂ZrO₅ or SiZrO₂ for instance.

In the present disclosure, the composition of the matrix is theorical, and the atomic ratios should be understood as an aimed composition, provided that the final composition may comprise up to 10at% of impurities. The impurities are additional elements that may be included in the composition, but not cited in the molecular formula. These impurities may be organic moieties coming from precursors of the metal oxide matrix. A matrix comprising less than 10 wt% of impurities, preferably less than 5 wt% of impurities is considered pure.

In a subsequent step, said dispersion is sprayed in a reactor under dry atmosphere to form droplets. Preferably, the dry atmosphere is an inert atmosphere. By "dry" atmosphere, is it meant an atmosphere essentially anhydrous, with an absolute humidity below 0.1%. Such a dry atmosphere may be obtained by dewatering of ambient atmosphere, leading to an oxygen rich atmosphere. Alternatively, a nitrogen atmosphere may be used, leading to a water free and oxygen free atmosphere.

In a subsequent step, the solvent is evaporated by heating said droplets and a reaction of the metal oxide precursor is triggered with a controlled amount of aqueous vapor in the reactor.

Finally, capsules comprising nanoparticles in a metal oxide matrix are collected. Said capsules are composite particles comprising nanoparticles dispersed in a metal oxide matrix.

In a preferred embodiment, the method of encapsulation is run as a continuous process.

### Semi-conductive nanoparticles

In an embodiment, the nanoparticles are semi-conductive nanoparticles. Semi-conductive nanoparticles are very sensitive to oxidative and hot conditions, leading to a degradation of their structural and/or physical properties. The present method of encapsulation prevents alteration of these properties.

In this disclosure, the semi-conductive nanoparticles can be any kind of semi-conductive material prepared in the form of nanoparticles.

Suitable semi-conductive nanoparticles may be selected from semi-conductive nanoparticles known as quantum dots, which may have various composition, shape and structure.

### Quantum dots composition

In one embodiment, the quantum dots comprise a material of formula

MₓQ_{y}E_{z}A_{w}

in which M is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof; Q is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof; E is selected from the group consisting of O, S, Se, Te, C, N, P, As, Sb, F, Cl, Br, I, or a mixture thereof; and A is selected from the group consisting of O, S, Se, Te, C, N, P, As, Sb, F, Cl, Br, I, or a mixture thereof. x, y, z and w are independently a decimal number from 0 to 5; x, y, z and w are not simultaneously equal to 0; x and y are not simultaneously equal to 0; z and w are not simultaneously equal to 0.

Especially, quantum dots may comprise a material of formula MₓE_{y}, in which M is Zn, Cd, Hg, Cu, Ag, Al, Ga, In, Si, Ge, Pb, Sb or a mixture thereof; and E is O, S, Se, Te, N, P, As or a mixture thereof. x and y are independently a decimal number from 0 to 5, with the proviso that x and y are not 0 at the same time.

In a specific embodiment, quantum dots comprise a material selected from the group consisting of CdS, CdSe, CdTe, ZnS, ZnSe, ZnTe, HgS, HgSe, HgTe, HgO, GeS, GeSe, GeTe, SnS, SnSe, SnTe, PbS, PbSe, PbTe, GeS₂, GeSe₂, SnS₂, SnSe₂, CuInS₂, CuInSe₂, CuInZnS, CuInZnSe, AgInS₂, AgInSe₂, CuS, Cu₂S, Ag₂S, Ag₂Se, Ag₂Te, FeS, FeS₂, InP, Cd₃P₂, Zn₃P₂, CdO, ZnO, FeO, Fe₂O₃, Fe₃O4, Al₂O₃, TiO₂, MgO, MgS, MgSe, MgTe, AlN, AlP, AlAs, AlSb, GaN, GaP, GaAs, GaSb, InN, InP, InAs, InSb, InAsP, TlN, TlP, TlAs, TlSb, MoS₂, PdS, Pd₄S, WS₂, CsPbCl₃, PbBr₃, CsPbBr₃, CH₃NH₃PbI₃, CH₃NH₃PbCl₃, CH₃NH₃PbBr₃, CsPbI₃, FAPbBr₃, FAPbI₃ (where FA stands for formamidinium), or a mixture thereof.

In one embodiment, quantum dots are doped with at least one transition metal such as, for example, Sc, Y, Ti, Zr, Hf, Rf, V, Nb, Ta, Dd, Cr, Mo, W, Sg, Mn, Tc, Re, Bh, Fe, Ru, Os, Hs, Co, Rh, Ir, Ni, Pd, Pt, Cu, Ag or Au. Preferably, quantum dots are doped with Mg, Mn, Al, Cu, Te or Ag. In particular, ZnSe quantum dots doped with Mn :ZnSe:Mn, ZnSe quantum dots doped with Al: ZnSe:Al, or ZnSe quantum dots doped with Mg: ZnSe:Mg are suitable. Amount of dopant is preferably less than 10wt%. Dopant amount of 5wt% or 2wt% are suitable.

### Quantum dots shape

In one embodiment, quantum dots may have different shapes, provided that they present a nanometric size leading to quantum confinement in the nanoparticle.

Quantum dots may have nanometric sizes in three dimensions, allowing quantum confinement in all three spatial dimensions. Such quantum dots are for instance nanocubes or nanospheres.

Quantum dots may have a nanometric sizes in two dimensions, the third dimension being larger: quantum confinement is in two spatial dimensions. Such quantum dots are for instance nanorods, nanowires or nanorings.

Quantum dots may have a nanometric size in one dimension, the other dimensions being larger: quantum confinement is in one spatial dimension only. Such quantum dots are for instance nanoplates, nanosheets, nanoribbons or nanodisks. Nanoplates are especially interesting in this disclosure because absorption cross section *- i.e.,* efficiency to capture a photon of incident light on the quantum dot - is ten times higher than a nanosphere having the same composition and structure emitting at the same wavelength. This higher cross section improves significantly sensitivity of assays. In addition, nanoplates have narrower FWHM emission spectra - typically below 40 nm - and shorter photoluminescence decay time - by one order of magnitude - as compared to spherical quantum dots.

The exact shape of quantum dots defines confinement properties; then electronic and optical properties.

### Quantum dots structure

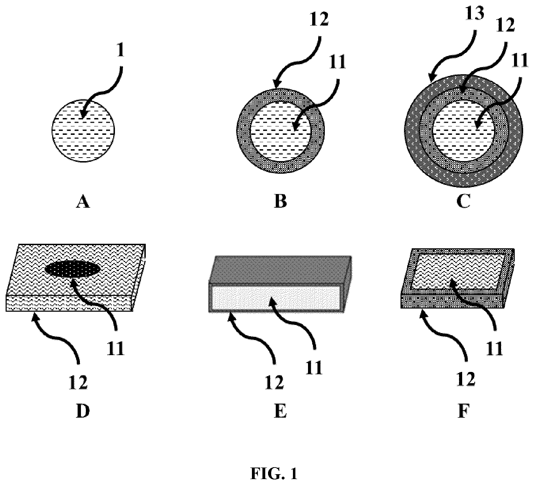

In an embodiment, quantum dots are homostructures. By homostructure, it is meant that the quantum dot is homogenous and has the same local composition in all its volume. A homogeneous spherical quantum dot is illustrated in figure 1A.

Suitable homostructured nanoparticles are III-V semi-conductive nanoparticles, preferably phosphide quantum dots, preferably selected from the group of InP, Cd₃P₂, Zn₃P₂, AlP, GaP, TlP quantum dots.

Other suitable homostructured nanoparticles are II-VI semi-conductive nanoparticles, preferably selected from the group of CdSe, CdSeS, ZnSe, ZnSeₓS₍₁₋ₓ₎ quantum dot, where x is a rational number between 0 (excluded) and 1 (excluded).

Other particularly suitable homostructured nanoparticles are I-III-VI₂ type semi-conductive nanoparticles and are selected from AgInS₂, AgInSe₂, CuₓIn₍₁₋ₓ₎S₂, CuₓIn₍₁₋ₓ₎Se₂, especially CuInS₂ and CuInSe₂ quantum dots, where x is a rational number between 0 (excluded) and 1 (excluded).

In an alternative embodiment, quantum dots are heterostructures. By heterostructure, it is meant that the quantum dot is comprised of several sub-volumes, each sub-volume having a different composition from neighbouring sub-volumes. In a particular embodiment, all sub-volumes have a composition defined by formula (II) disclosed above, with different parameters, *i.e.,* elemental composition and stoichiometry.

Example of heterostructure are core/shell nanoparticles, the core (11) having any shape disclosed above. A shell (12) is a layer covering totally or partially the core. A particular example of core/shell heterostructure is a multi-layered structure comprising a core (11) and several successive shells (12, 13). For convenience, these multi-layered heterostructures are named core/shell hereafter. Core (11) and shell (12,13) may have the same shape - sphere in sphere for example - or not - sphere in plate for instance. A core/shell spherical nanoparticle is illustrated in figure 1B. A core/shell/shell spherical nanoparticle is illustrated in figure 1C. A sphere in plate nanoparticle is illustrated in figure 1D - also named a dot in plate. A core/shell nanoplate is illustrated in figure 1E.

Another example of heterostructure are core/crown nanoparticles, the core having any shape disclosed above. A crown is a band of material disposed on the periphery of the core. This heterostructure is particularly useful with cores being nanoplates and crown disposed on the edges of the nanoplate. A core/crown nanoplate is illustrated in figure 1F.

These heterostructure may have a gradient of composition from the core to the outside of the shell so that there is no precise boundary between core and shell but properties in centre of the core are different from properties on the outer boundary of shell.

In a configuration, nanoparticles are II-VI type semi-conductive nanoparticles and comprise a core based on cadmium, sulfur and selenium and are selected from:
- CdSe/CdS, CdSe/CdS/ZnS, CdSe/CdS/ZnSe, CdSe/CdS/ZnSe_{y}S_{(1-y)}, CdSe/ZnSe/ZnS, CdSe/ZnSeₓS₍₁₋ₓ₎/ZnS,
- CdSeₓS₍₁₋ₓ₎/ZnS, CdSeₓS₍₁₋ₓ₎/ZnSe, CdSeₓS₍₁₋ₓ₎/ZnSe_{y}S_{(1-y)}, CdSeₓTe₍₁₋ₓ₎/ZnS, CdSeₓTe₍₁₋ₓ₎/ZnSe,
- CdSe/Cd_{y}Zn_{(1-y)}S, CdSe/Cd_{y}Zn_{(1-y)}S/ZnS, CdSe/Cd_{y}Zn_{(1-y)}S/ZnSe, CdSe/Cd_{y}Zn_{(1-y)}S/ZnSe_{z}S_{(1-z)}
- CdSe/Cd_{y}Zn_{(1-y)}Se, CdSe/Cd_{y}Zn_{(1-y)}Se/ZnS, CdSe/Cd_{y}Zn_{(1-y)}Se/ZnSe, CdSe/Cd_{y}Zn_{(1-y)}Se/ZnSe_{z}S_{(1-z)},
- CdSeₓS₍₁₋ₓ₎/CdS, CdSeₓS₍₁₋ₓ₎/CdS/ZnS, CdSeₓS₍₁₋ₓ₎/CdS/ZnSe, CdSeₓS₍₁₋ₓ₎/CdS/ZnSe_{y}S_{(1-y)},
- CdSeₓS₍₁₋ₓ₎/Cd_{y}Zn_{(1-y)}S, CdSeₓS₍₁₋ₓ₎/Cd_{y}Zn_{(1-y)}S/ZnS, CdSeₓS₍₁₋ₓ₎/Cd_{y}Zn_{(1-y)}S/ZnSe, CdSeₓS₍₁₋ₓ₎/Cd_{y}Zn_{(1-y)}S/ZnSe_{z}S_{(1-z)},
- CdSeₓS₍₁₋ₓ₎/Cd_{y}Zn_{(1-y)}Se, CdSeₓS₍₁₋ₓ₎/Cd_{y}Zn_{(1-y)}Se/ZnS, CdSeₓS₍₁₋ₓ₎/Cd_{y}Zn_{(1-y)}Se/ZnSe, CdSeₓS₍₁₋ₓ₎/Cd_{y}Zn_{(1-y)}Se/ZnSe_{z}S_{(1-z)},
where x, y and z are rational numbers between 0 (excluded) and 1 (excluded). Potentially, these semi-conductive nanoparticles emit light by fluorescence. Emitted light is typically a band centered on a wavelength in the visible range from 380 nm to 780 nm. Emitted light is typically a band having a FWHM less than 50 nm, preferably less than 30 nm, more preferably less than 20 nm.

In a configuration, nanoparticles are II-VI type semi-conductive nanoparticles and comprise a core based on zinc, sulfur and selenium and are selected from:
- ZnSe/ZnS, ZnSe/ZnSe_{y}S_{(1-y)}, ZnTe/ZnSe_{y}S_{(1-y)}
- ZnSeₓS₍₁₋ₓ₎/ZnS, ZnSeₓS₍₁₋ₓ₎/ZnSe, ZnSeₓS₍₁₋ₓ₎/ZnSe_{y}S_{(1-y)}, ZnSeₓTe₍₁₋ₓ₎/ZnS, ZnSeₓTe₍₁₋ₓ₎/ZnSe, ZnSeₓTe₍₁₋ₓ₎/ZnSeₓS₍₁₋ₓ₎,
- ZnSe/Cd_{y}Zn_{(1-y)}S, ZnSe/Cd_{y}Zn_{(1-y)}S/ZnS, ZnSe/Cd_{y}Zn_{(1-y)}S/ZnSe, ZnSe/Cd_{y}Zn_{(1-y)}S/ZnSe_{z}S_{(1-z)}
- ZnSe/Cd_{y}Zn_{(1-y)}Se, ZnSe/Cd_{y}Zn_{(1-y)}Se/ZnS, ZnSe/Cd_{y}Zn_{(1-y)}Se/ZnSe, ZnSe/Cd_{y}Zn_{(1-y)}Se/ZnSe_{z}S_{(1-z)},
- ZnSeₓS₍₁₋ₓ₎/ZnS, ZnSeₓS₍₁₋ₓ₎/ZnS/ZnSe, ZnSeₓS₍₁₋ₓ₎/ZnS/ZnSe_{y}S_{(1-y)},
- ZnSeₓS₍₁₋ₓ₎/Cd_{y}Zn_{(1-y)}S, ZnSeₓS₍₁₋ₓ₎/Cd_{y}Zn_{(1-y)}S/ZnS, ZnSeₓS₍₁₋ₓ₎/Cd_{y}Zn_{(1-y)}S/ZnSe, ZnSeₓS₍₁₋ₓ₎/Cd_{y}Zn_{(1-y)}S/ZnSe_{z}S_{(1-z)},
- ZnSeₓS₍₁₋ₓ₎/Cd_{y}Zn_{(1-y)}Se, ZnSeₓS₍₁₋ₓ₎/Cd_{y}Zn_{(1-y)}Se/ZnS, ZnSeₓS₍₁₋ₓ₎/Cd_{y}Zn_{(1-y)}Se/ZnSe, ZnSeₓS₍₁₋ₓ₎/Cd_{y}Zn_{(1-y)}Se/ZnSe_{z}S_{(1-z)},
where x, y and z are rational numbers between 0 (excluded) and 1 (excluded). Potentially, these semi-conductive nanoparticles emit light by fluorescence. Emitted light is typically a band centered on a wavelength in the visible range from 380 nm to 780 nm. Emitted light is typically a band having a FWHM less than 50 nm, preferably less than 30 nm, more preferably less than 20 nm.

In a configuration, nanoparticles are II-VI type semi-conductive nanoparticles and comprise a core based on zinc, cadmium, sulfur and selenium and are selected from:
- Cd_{w}Zn_{(1-w)}Se/CdS, Cd_{w}Zn_{(1-w)}Se/CdS/ZnS, Cd_{w}Zn_{(1-w)}Se/ZnSe/ZnS, Cd_{w}Zn_{(1-w)}Se/CdS/ZnSe, Cd_{w}Zn_{(1-w)}Se/CdS/ZnSe_{y}S_{(1-y)},
- Cd_{w}Zn_{(1-w)}SeₓS₍₁₋ₓ₎/ZnS, Cd_{w}Zn_{(1-w)}SeₓS₍₁₋ₓ₎/ZnSe, Cd_{w}Zn_{(1-w)}SeₓS₍₁₋ₓ₎/ZnSe_{y}S_{(1-y)}, Cd_{w}Zn_{(1-w)}SeₓTe₍₁₋ₓ₎/ZnS, Cd_{w}Zn_{(1-w)}SeₓTe₍₁₋ₓ₎/ZnSe,
- Cd_{w}Zn_{(1-w)}Se/Cd_{y}Zn_{(1-y)}S, Cd_{w}Zn_{(1-w)}Se/Cd_{y}Zn_{(1-y)}S/ZnS, Cd_{w}Zn_{(1-w)}Se/Cd_{y}Zn_{(1-y)}S/ZnSe, Cd_{w}Zn_{(1-w)}Se/Cd_{y}Zn_{(1-y)}S/ZnSe_{z}S_{(1-z)}
- Cd_{w}Zn_{(1-w)}Se/Cd_{y}Zn_{(1-y)}Se, Cd_{w}Zn_{(1-w)}Se/Cd_{y}Zn_{(1-y)}Se/ZnS, Cd_{w}Zn_{(1-w)}Se/Cd_{y}Zn_{(1-y)}Se/ZnSe, Cd_{w}Zn_{(1-w)}Se/Cd_{y}Zn_{(1-y)}Se/ZnSe_{z}S_{(1-z)},
- Cd_{w}Zn_{(1-w)}SeₓS₍₁₋ₓ₎/CdS, Cd_{w}Zn_{(1-w)}SeₓS₍₁₋ₓ₎/CdS/ZnS, Cd_{w}Zn_{(1-w)}SeₓS₍₁₋ₓ₎/CdS/ZnSe, Cd_{w}Zn_{(1-w)}SeₓS₍₁₋ₓ₎/CdS/ZnSe_{y}S_{(1-y)},
- Cd_{w}Zn_{(1-w)}SeₓS₍₁₋ₓ₎/Cd_{y}Zn_{(1-y)}S, Cd_{w}Zn_{(1-w)}SeₓS₍₁₋ₓ₎/Cd_{y}Zn_{(1-y)}S/ZnS, Cd_{w}Zn_{(1-w)}SeₓS₍₁₋ₓ₎/Cd_{y}Zn_{(1-y)}S/ZnSe, Cd_{w}Zn_{(1-w)}SeₓS₍₁₋ₓ₎/Cd_{y}Zn_{(1-y)}S/ZnSe_{z}S_{(1-z)},
- Cd_{w}Zn_{(1-w)}SeₓS₍₁₋ₓ₎/Cd_{y}Zn_{(1-y)}Se, Cd_{w}Zn_{(1-w)}SeₓS₍₁₋ₓ₎/Cd_{y}Zn_{(1-y)}Se/ZnS, Cd_{w}Zn_{(1-w)}SeₓS₍₁₋ₓ₎/Cd_{y}Zn_{(1-y)}Se/ZnSe, Cd_{w}Zn_{(1-w)}SeₓS₍₁₋ₓ₎/Cd_{y}Zn_{(1-y)}Se/ZnSe_{z}S_{(1-z)},
where w, x, y and z are rational numbers between 0 (excluded) and 1 (excluded). Potentially, these semi-conductive nanoparticles emit light by fluorescence. Emitted light is typically a band centered on a wavelength in the visible range from 380 nm to 780 nm. Emitted light is typically a band having a FWHM less than 50 nm, preferably less than 30 nm, more preferably less than 20 nm.

Most preferred II-VI nanoparticles are CdSe/CdS/ZnS, CdSeₓS₍₁₋ₓ₎/CdS/ZnS, CdSe/ZnSe/ZnS, CdSe/ZnSeₓS₍₁₋ₓ₎/ZnS, CdSeₓS₍₁₋ₓ₎/ZnSe/ZnS, CdₓZn₍₁₋ₓ₎Se/ZnSe/ZnS.

Other particularly suitable nanoparticles are III-V type semi-conductive nanoparticles and are selected from InP/ZnS, InP/ZnSe, InP/ZnSeₓS₍₁₋ₓ₎, InP/CdS/ZnS, InP/ZnSe/ZnS, InP/ZnSeₓS₍₁₋ₓ₎/ZnS, InP/GaP, CuₓIn_{y}Zn_{(1-x-y)}S/ZnS, InₓAs₍₁₋ₓ₎P/ZnSeₓS₍₁₋ₓ₎, CsPbBr₃, CsPbI₃, FAPbI₃, where FA stands for formamidinium and x and y are rational numbers between 0 (excluded) and 1 (excluded).

Other particularly suitable nanoparticles are selected from doped quantum dots as core, such as ZnSe:Mn/ZnS, or ZnSe:Cu/ZnS.

Other particularly suitable nanoplates are selected from ZnTe/ZnSe_{y}S_{(1-y)}, ZnSeₓTe₍₁₋ₓ₎/ZnS, ZnSeₓTe₍₁₋ₓ₎/ZnSe, ZnSeₓTe₍₁₋ₓ₎/ZnSe_{y}S_{(1-y)}, where x and y are rational numbers between 0 (excluded) and 1 (excluded).

### Dispersion

In an embodiment, the dispersion of nanoparticles in a solvent comprises from 0.1wt% to 15wt% of nanoparticles, from 3wt% to 80wt% of metal oxide precursor, and from 5wt% to 97wt% of solvent. Preferably, the dispersion of nanoparticles in a solvent comprises from 0.1wt% to 5wt% of nanoparticles, from 3wt% to 30wt% of metal oxide precursor and solvent in sufficient quantity for 100%. The amount of solvent is determined according to a balance between efficiency and cost: a very diluted dispersion is preferred for control of capsules size but leads to high consumption - or recycling - of solvent. On the other hand, a very concentrated dispersion may lead to troubles in process, such as plugging of spray head or destabilization of dispersion... The range from 70wt% to 95wt% of solvent has been determined as the best tradeoff. The following conditions for dispersion composition in nanoparticles (wt%)/metal oxide precursors (wt%)/solvent (wt%) are especially suitable: 0.25/7.75/92; 1/15/84; 2/20/78.

In an embodiment, the relative amount of nanoparticles and metal oxide precursor is determined in order to define the loading charge of capsules. Indeed, assuming that all metal oxide precursor reacts to generate a metal oxide - releasing a by-product during reaction - and assuming that all nanoparticles are actually encapsulated in the metal oxide, the loading charge of capsules may be in a range from 0.1wt% to 40wt%. Accordingly, the ratio defined by the mass of nanoparticles divided by the mass of metal oxide generated from the metal oxide precursor is in a range from 0.1wt% to 40wt%, preferably from 2wt% to 20wt%. High ratio is preferred when concentrated composition in nanoparticles are expected - with fluorescent nanoparticles used in colour conversion layers for instance - in such cases, said ratio may be in a range from 10wt% to 40wt%. On the other hand, when nanoparticles may be very diluted - with fluorescent nanoparticles used as markers for instance - said ratio may be in a range from 0.1wt% to 5wt%.

For the sake of clarity, 100g of a dispersion comprising 1wt% nanoparticles, 20wt% of aluminum tri sec butoxide precursor and 79wt% of heptane would lead to generation of 4.2g of alumina - Al₂O₃ metal oxide - thus defining a loading charge of 24% *- i.e.,* the ratio of 1 divided by 4.2.

In this disclosure, the spraying step of the dispersion is characterized by the mass flow rate of the dispersion on the one hand and the mass flow rate of gas on the other hand. Indeed, during spraying step, formation of droplets of dispersion is induced by the injection of gas. The pressure of gas governs nebulization, and the mass flow rate of gas defines the immediate environment of the formed droplets. In other words, if gas injected during spraying step is anhydrous, the droplets are formed in this gaseous anhydrous environment. In an embodiment, the ratio defined by the mass flow rate of sprayed dispersion divided by the mass flow rate of gas injected for spraying is in a range from 0.1 to 100. Preferably, said ration is in a range from 1 to 50. This specific range for said ratio has been found optimal for the method of encapsulation, to ensure the adequate kinetics of evaporation and reaction on the one hand and a sufficient mass flow rate for productivity on the other hand.

A key point of the disclosure is to separate in time the two steps of dispersion solvent evaporation and precursors reaction triggered with aqueous vapor. This separation in time may be achieved by a two-stage reactor, in which each step is achieved in a specific stage. Alternatively, this separation in time may be achieved by a single-stage reactor.

### Processing aids

In order to optimize the method of encapsulation, processing aids may be added in the dispersion. These additives may have various effects.

Processing aids may be ligands, used to control dispersion of nanoparticles in the dispersion. Ligands may be selected from Carboxylic Acids, Carboxylate, Primary Amine, Secondary Amine, Tertiary Amine, Thiols, Dithiols, Disulfide, Phosphine, Phosphite, Siloxanes, Ionic Compounds, Complexes - or Metal Salts -, Phosphonic Acid or Thiolated Zwitterionic Ligands, Complexing Agents.

Suitable Carboxylic Acid are Oleic acid, myristic acid, mercaptoundecanoic acid, palmitic acid, stearic acid, citric acid, thioglycolic acid, ethylenediaminetetraacetic acid (EDTA), oxalic acid, mercaptosuccinic acid, malonic acid, tartaric acid, hexanoic acid, lauric acid, Pentynoic acid.

Suitable Carboxylate are Oleate, stearate, palmitate, undecanoate, myristate, formate, acetate, propanoate, butanoate, oxalate, citrate.

Suitable Primary Amine are Oleylamine, hexadecylamine, octylamine, butylamine, cysteamine, ethylenediamine, propylamine, methylamine, dodecylamine, benzylamine, isopropylamine, octadecylamine, 1-Amino-3-butyne.

Suitable Secondary Amine are Dioctylamine, dibutylamine, diethanolamine, dipropylamine, diisopropylamine, N-methylethylenediamine.

Suitable Tertiary Amine are Trioctylamine, triethanolamine, tripropylamine, triisopropylamine, EDTA, triazacyclodecane, .

Suitable Thiols are octanethiol, butanethiol, dodecanethiol, mercaptosuccinic acid, mercaptopropionic acid, mercaptoundecanoic acid, thioglycolic acid, cysteamine, 2-mercaptoethanesulfonic acid, 2-mercaptoethanol, glutathionic acid, benzylmercaptan.

Suitable Dithiols are 1,2-ethanedithiol, dithiodiglycolic acid, 3,3'-dithiobispropionic acid, dithiothreitol, 1,3-dimercapto-2-propanol acid, dithibutyric acid, dithiotartaric acid, 1,4-butanedithiol, 1,6-hexanedithiol, lipoic acid, dihydrolipoic acid.

Suitable Disulfide are Dioleyl disulfide, Diocatadecyl disulfide, Didodectyl disulfide, Dioctyl disulfide, Glutathione disulfide, Cystine, Dimethyl disulfide, Diphenyl disulfide.

Suitable Phosphine are Trioctylphosphine, diphenylphosphine, triphenylphosphine, tributylphosphine, triisobutylphosphine, tris(pentafluorophenyl)phosphine, Trimethylphosphine, Triethyl phosphine, Triarylphosphine, Trioctylphosphine oxide (TOPO), Triphenylphosphine oxide (TPPO), Tributylphosphine oxide (TBPO), Tris(2-chlorophenyl)phosphine oxide, Tris(2,4-dimethylphenyl)phosphine oxide.

Suitable Phosphite are Tributylphosphite, triphenylphosphite, trimethylphosphite, tris(2-ethylhexyl)phosphite.

Suitable Siloxanes are Octamethylcyclotetrasiloxane (OMCTS), hexamethyldisilazane, trimethoxysilane, (3-aminopropyl)triethoxysilane (APTES), phenyltrimethoxysilane, dimethyldichlorosilane, methyltrimethoxysilane, tetramethyl orthosilicate, Trimethylsilylpropylthiol, Vinyltrimethoxysilane, Octyltriethoxysilane, Hexamethyldisilazane (EA4DS).

Suitable Ionic Compounds are zinc chloride, zinc bromide, zinc/cadmium iodide, cadmium chloride, cadmium bromide, cadmium iodide, 2-mercaptoethanesulfonic acid, phosphatidylcholine, sodium dihydrogen phosphate, zinc nitrate, cadmium sulfate, Trialkylindium, Trioctylphosphine selenide (TOPSe), Tri-n-butylphosphine selenide, Tetrabutylammonium bromide, Tetrabutylammonium iodide, Tetrabutylammonium chloride.

Suitable Complexes are zinc oleate, zinc myristate, zinc stearate, zinc citrate, zinc propionate, zinc butyrate, zinc oxalate, zinc oleylamine, zinc dichloride, cadmium oleate, cadmium myristate, cadmium stearate, cadmium citrate, cadmium propionate, cadmium butyrate, cadmium oxalate, cadmium oleylamine, cadmium dichloride, oleylamine complex with CdSe, trioctylphosphine complex with CdSe.

Suitable Phosphonic Acid are Phenylphosphonic acid, hexylphosphonic acid, dodecylphosphonic acid, aminomethylphosphonic acid, ethylphosphonic acid.

Suitable Thiolated Zwitterionic Ligands are Cysteine methyl ester, N-Acetyl-L-cysteine (NAC), 3-(N,N-Dimethylamino)propane-1-thiol, Sulfobetaine thiol, Carboxybetaine thiol.

Suitable Complexing Agent are ethylenediaminetetraacetic acid, triethanolamine, citric acid, oxalic acid, sodium dihydrogen phosphate, triethyl citrate, quaternary ammonium compounds.

Other suitable ligands are Poly(ethylene glycol)-alkyl ethers, Poly(ethylene glycol)-aryl ethers, Bis(trimethylsilyl) sulfide, Tributylphosphine sulfide, Potassium ethyl xanthate, Sodium diethyldithiocarbamate, Pyrrolidinedithiocarbamate, Morpholine dithiocarbamate, Benzyl dithiocarbamate, 2-Mercaptobenzimidazole, 4-Methyl-2-mercaptobenzimidazole, 5-(Difluoromethoxy)-2-mercapto-1H-benzimidazole, 5-Chloro-2-mercaptobenzothiazole, 6-Methoxy-2-mercaptobenzimidazole, 1-Butylpyridinium tetrafluoroborate, 2-(Diphenylphosphino)benzeneboronic acid, Dopamine hydrochloride.

Processing aids may be anti-agglomerants - also known as anti-caking agents - used to prevent agglomeration of capsules. Anti-agglomerants may be selected from Stabilizing Polymers, Charged Polymers, Fatty Acids, Phospholipides, Surfactants - or surface-active agents.

Suitable Stabilizing Polymers are Poly(ethylene glycol) (PEG), polyvinylpyrrolidone (PVP), polymethylmethacrylate (PMMA), poly(lactic acid) (PLA), Pluronic F127, polycarbonate, polyimide, Genesee Polymers 988 (GP-988).

Suitable Charged Polymers - *i.e*., anionic or cationic polymers - are Poly(acrylic acid) (PAA), poly(methacrylic acid) (PMAA), Polystyrene, poly(styrene sulfonate) (PSS), poly(aspartic acid), poly(glutamic acid), poly(lysine), PEG-1000-CA, PEG-350-CA, M1000-SA, EO2CA (2-[2-(2-methoxyethoxy)ethoxy] acetic acid), PEG-bisphosphonate, Methoxy-PEG-phosphonate (mPEG-P), Amino-PEG-phosphonate, Carboxy-PEG-phosphonate, Diethylphosphonate-terminated PEG.

Suitable Fatty Acids are Oleic acid, stearic acid, linoleic acid, palmitic acid, and arachidic acid.

Suitable Phospholipides are poly(ethylene glycol) phosphatidylethanolamine (PEG-PE), phosphatidylcholine (PC), Phosphatidylserine, Phosphatidylinositol, Phosphatidylglycerol, Sphingomyelin, Lysophosphatidylcholine, 1,2-Dioleoyl-sn-glycero-3-phosphocholine (DOPC), 1,2-Distearoyl-sn-glycero-3-phosphoethanolamine (DSPE).

Suitable Surfactants are Triton X-100, Tween 20, Span 80, Brij 35, Nonidet P-40, Igepal CO-630, PEG-200, Tween 80.

Processing aids may be cosolvents used to prevent agglomeration of capsules. Coslvents may be selected from Alcohols, Glycols, Amides, Amines, Ketones, Hydrocarbons, Chlorinated Solvents, Ethers.

Suitable Alcohols are Methanol, ethanol, isopropanol, butanol, pentanol, octanol, benzyl alcohol.

Suitable Glycols are Ethylene glycol, propylene glycol, glycerol, 1,3-propanediol, polyethylene glycol (PEG 400), butylene glycol.

Suitable Amides are Dimethylformamide (DMF), N-methyl-2-pyrrolidone (NMP), formamide, dimethylacetamide (DMA).

Suitable Amines are tri-n-octylamine, 1,3-diaminopropane, oleylamine, hexadecylamine, octadecylamine.

Suitable Ketones are Acetone, methyl ethyl ketone (MEK), cyclohexanone, 2-pentanone, acetophenone.

Suitable Hydrocarbons are Toluene, hexane, heptane, octane, dodecane, cyclohexane.

Suitable Chlorinated Solvents are Dichloromethane, chloroform, 1,2-dichloroethane, trichloroethylene.

Suitable Ethers are Tetrahydrofuran (THF), diethyl ether, methyl tert-butyl ether (MTBE).

Processing aids may be dispersants - also known as dispersing agents - used to prevent agglomeration of nanoparticles. Dispersants may be selected from Nonionic Polymers, Ionic Compounds, Polymeric Amphiphiles, Siloxanes.

Suitable Nonionic Polymers are Polyvinylpyrrolidone (PVP), Poly(ethylene glycol) (PEG), Pluronic F-127, polyvinyl alcohol (PVA), dextran, hydroxypropylcellulose (HPC), IGEPAL CO-520, IGEPAL CO-630, Squalane, Squalene.

Suitable Ionic Compounds are Sodium dioctyl sulfosuccinate, Sodium lauryl sulfate, Sodium dioctyl sulfosuccinate (AOT), phosphatidylcholine.

Suitable Polymeric Amphiphiles are Poly(ethylene oxide)-poly(propylene glycol) (PEO-PPO), Poloxamers, ethoxylated alcohols for instance from the Lutensol^{®} range such as Lutensol AT50, polycaprolactone (PCL).

Suitable Siloxanes are octamethylcyclotetrasiloxane (OMCTS), hexamethyldisilazane, dimethyldichlorosilane, trimethoxysilane, tetraethyl orthosilicate (TEOS).

### Organic additives

In this disclosure, nanoparticles are encapsulated in a metal oxide matrix. Sometimes, organic additives may have complimentary properties in association with nanoparticles. For instance, if nanoparticles are used as optical filters, organic light absorbers may be mixed with nanoparticles to have synergetic or additive effects. For instance, if nanoparticles are used as luminescent particles, organic luminophores may be mixed with nanoparticles to promote cascade effects...

Therefore, organic additives may be added in the dispersion provided that the organic additive is associated with the nanoparticles - either by chemical interactions such as complexation or ligand like interactions; or by intermolecular interactions driving surface interaction between the nanoparticles and the organic additive leading to some kind of insolubilization and formation of a layer of organic additives on the nanoparticles. Then, the nanoparticles treated in the method of encapsulation here disclosed will be encapsulated together with the organic additive. Finally, the capsules will comprise nanoparticles bearing organic additives, the whole being embedded in a metal oxide matrix.

In an embodiment, the ratio of the mass of organic additives divided by the mass of nanoparticles is in a range from 1wt% to 20wt%.

In an embodiment, the organic additives are selected from fluorescent organic compounds, isotopic labelled compounds, optical absorbers - such as UV absorbers or visible light absorbers.

### Two-stage reactor

In an embodiment, the method of encapsulation is run with a two-stage reactor, with successive enclosures for the first stage and the second stage. In the first stage of the reactor, the solvent contained in the droplets is evaporated by heating leading to droplets consisting essentially of nanoparticles and metal oxide precursor. This evaporation step is preferably performed at a temperature in a range from 100°C to 250°C, more preferably in a range from 130°C to 200°C. The gas injected for spraying may be at room temperature and heated in the first stage of the reactor or at a temperature in a range from 100°C to 250°C, preferably in a range from 130°C to 200°C. In an embodiment, the temperature of the gas injected is adjusted to the temperature specifications inside the first stage of the reactor.

Then, in the second stage of the reactor, the controlled amount of aqueous vapor is introduced to trigger the reaction of the metal oxide precursor. This reaction step is preferably performed at a temperature in a range from 100°C to 250°C more preferably in a range from 130°C to 200°C. The absolute humidity in the second enclosure is in a range from 0.5% to 20%, preferably from 2% to 10%.

In an embodiment, the temperature in the second enclosure is the same as in the first enclosure.

The following conditions have been found especially adapted - noted as temperature in first enclosure (°C)/temperature in second enclosure (°C)/absolute humidity in second enclosure (%): 150/175/1%; 140/180/7%; 130/160/5%, 150/200/1%; 150/200/5% ; 150/200/10%.

The absolute humidity in the second stage of the two-stage reactor is controlled by introduction of water - preferably by spraying water. The introduction of water is controlled by the process parameters, especially the gas flow rate of gas injected for spraying defining the residence time in the reactor under continuous conditions. The absolute humidity of water may be monitored by sensors and adjusted automatically.

The separation of process in two stages allows to ensure a complete evaporation of the droplets before triggering the reaction of metal oxide formation. If droplets were still containing some solvent - or other volatile compounds - the evaporation of said solvent during formation of metal oxide could lead to some unwanted porosity.

### Single-stage reactor

In a single-stage reactor, the separation of solvent evaporation step and reaction triggering with aqueous vapor step is achieved by the spraying conditions. Indeed, gas injection during spraying defines a spraying cone in which the gaseous atmosphere around droplets of dispersion is the gas injected, here an anhydrous gas. Outside the spraying cone, the atmosphere composition may be different, in particular may comprise aqueous vapor. In other words, physico-chemical conditions are not homogeneous in the enclosure of the reactor: the realization of two distinct zones in a single-stage reactor allows separation in time of evaporation step and reaction step.

In these conditions, the droplets formed by the spraying device - usually a spraying nozzle - remain in the anhydrous environment of the spraying cone for some time, said time being sufficient to achieve the evaporation by heating of the solvent. It is reminded here that droplets have a diameter in a sub-millimeter range leading to a very quick evaporation of the solvent, typically in less than few tenths of a second. Then, the droplets consisting essentially of nanoparticles and metal oxide precursor exit the spraying cone to enter in the zone of the reactor where the atmosphere is aqueous vapor rich, in order to trigger the reaction of metal oxide precursors.

Single-stage reactors are simpler to design and well spread in the industry.

In this embodiment, evaporating and triggering a reaction are performed in a single-stage reactor with a residence time in the reactor in a range from 0.1 s to 600 s at a temperature in a range from 100°C to 250°C. The gas injected for spraying is preferably hot, at a temperature in a range from 100°C to 250°C, similar to the temperature conditions inside the reactor.

Actually, the optimal residence time is linked to the temperature inside the single-stage reactor. Indeed, the key parameter here is how much energy is provided from the gas to the droplets to first evaporate the solvent, then trigger the reaction... A higher temperature enables a shorter residence time.

In a specific embodiment, triggering a reaction is performed with an absolute humidity in a range from 0.5% to 20%. As the physico-chemical conditions are not homogeneous in the reactor, the absolute humidity is here defined macroscopically for the whole reactor: water is almost absent from the spraying cone - as gas injected for spraying is anhydrous - while water is present outside the spraying cone.

The following conditions have been found especially adapted - noted as temperature in reactor (°C)/residence time (s)/absolute humidity in reactor (%): 110/300/5%; 130/100/2.5%; 150/20/1%, 150/200/1% ; 150/200/5% ; 150/200/10%.

### Extent of the reaction

Whatever the reactor selected to implement the method of encapsulation, the reaction of the metal oxide precursor is triggered by water, supplied in the subsequent step - in time - after evaporation.

Metal alkoxides react in the presence of water by hydrolysis of the alkoxy moieties then condensation with other metallic centers. The products of the reaction are then an alcohol - usually volatile in reaction conditions of the disclosed method of encapsulation - and a metal oxide solid. It has been surprisingly identified that extraction of the volatile hydrolysis product from the atmosphere led to improved performance of encapsulation: indeed, if partial pressure of volatile hydrolysis product increases, the reaction of hydrolysis and condensation is not complete, and capsules obtained are not dry enough to be collected on filters.

Similarly, organometallics are degraded upon water contact and lead to separation of the metallic center from the ligands - usually volatile in reaction conditions of the disclosed method of encapsulation. The metallic centers undergo oxidation with oxygen present in the atmosphere and/or water - inert atmosphere consisting essentially of nitrogen is thus not suitable in this case - to yield metal oxide solid. Again, it has been identified that extraction of the volatile product from the atmosphere led to improved performance of encapsulation.

Therefore, when metal oxide precursors release a volatile compound, it is preferred to perform evaporating and triggering a reaction with a partial pressure of said volatile compound less than 50 mbar, preferably less than 5 mbar, more preferably less than 1 mbar. To achieve said low content of volatile compound, a trapping device may be used, such as solvent condensers, absorption columns or media, or felling columns.

In addition, the partial pressure of nitrogen is preferably greater than 0.95 Patm - where Patm is the atmospheric pressure at the place of operation - to avoid ignition risks while keeping enough oxygen for complete formation of metal oxide.

### Annealing

After collection of capsules, annealing may be performed, with an annealing time in a range from 5 min to 300 min at a temperature in a range from 100°C to 250°C. Preferably, annealing time is in a range from 5 min to 300 min at a temperature in a range from 150°C to 220°C. Annealing leads to a consolidation and a densification of the metal oxide matrix. Thus, the barrier properties of the metal oxide are improved.

It has to be noted that annealing temperature is very low for this technical area of metal oxide materials. Usually, the temperature required for annealing is much higher and is not compatible with the nanoparticles: the latter may degrade. In particular, semi-conductive nanoparticles may lose their specific structure associated to their specific performances - nanometric structure, bandgap, optical properties, luminescence... With the method of encapsulation disclosed here, it is possible to achieve annealing at low temperature, without degrading the properties of nanoparticles, especially semi-conductive nanoparticles.

Without being bound by theory, it is believed that the reaction of metal oxide precursors may not be complete, and that annealing contributes to further hydrolyzing alkoxides or further degrade organometallics, especially on the external layer of the capsules. Preferably, annealing is performed with an absolute humidity in a range from 0.5% to 50%, preferably from 0.5% to 25%. Absolute humidity of 2%, 5%, 10%, 15%, 20% or 25% is suitable.

### BRIEF DESCRIPTION OF THE DRAWINGS

**Figure 1A-1F** illustrates various nanoparticles (1) with homostructure (A) or heterostructures: spherical core/shell (B), spherical core/shell/shell (C), dot in plate (D), nanoplate core/shell (E) and nanoplate core/crown (F).

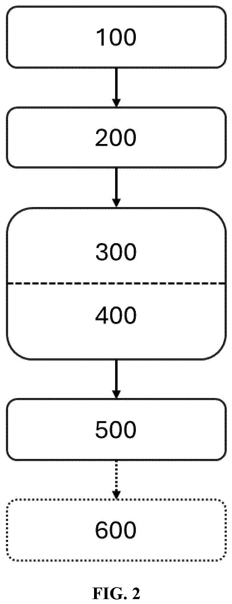

**Figure 2** shows the flow of a method of encapsulation according to an embodiment in which evaporating (300) and triggering a reaction (400) are performed in two different reactors.
**Figure 3** shows the flow of a method of encapsulation according to an embodiment in which evaporating (300) and triggering a reaction (400) are performed in a single reactor.
**Figure 4** shows the relative intensity (RI) of fluorescent light (scaled at 1 for initial time) versus time (t in hours) during ageing test, for CdSe/ZnSe/ZnS nanospheres used in example 3, without encapsulation - dotted line - and with encapsulation - solid line.

### EXAMPLES

The present disclosure is further illustrated by the following examples.

### Example 1: CdSe nanoparticles in ZrO₂ matrix - Single reactor - Capsules C1

In a 500 mL flask, 40 g of zirconium oxide precursor, Zr(OC₃H₇)₄ at 70-80 wt% in 1-propanol is heated at 50°C for 90 min, dried by three successive Nitrogen/Vacuum purges, and solubilized in 20 mL of cyclohexane and kept in Nitrogen atmosphere.

In a glovebox, 32 g of zirconium oxide precursor - in solution in cyclohexane - is introduced in a 900 mL bottle, then mixed with 18 mL of a dispersion at 8wt% of CdSe nanoparticles - diameter 13 nm - and 457 mL of cyclohexane, yielding the dispersion D1. Said dispersion D1 comprises 0.25wt% of CdSe nanoparticles, 7.65wt% of zirconium oxide precursor and 92.1wt% of solvent.

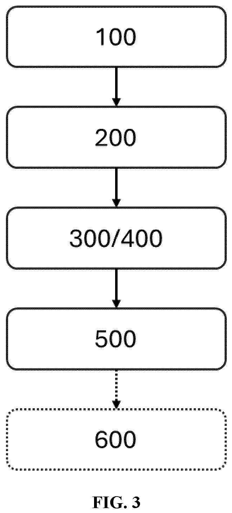

A reactor - thereafter named SPUTNIK, comprising a single enclosure - is heated at 110°C - internal temperature. The SPUTNIK devices allow to perform evaporating and triggering a reaction in a single reactor, as illustrated in Figure 3. First, 20 mL of cyclohexane are fed to a spray head in the SPUTNIK reactor. Then feeding of the spray head is switched to spray 20 mL of dispersion D1 at a flow rate of 2 L/min with dry nitrogen at a pressure of 1 bar and a flow rate of 30 L/min. Simultaneously, an additional flow of nitrogen gas of 30 L/min and absolute humidity of 10% is introduced in order to keep the absolute humidity constant at about 5% in the reactor. Lastly, 20 mL of cyclohexane are fed to the spray head for cleaning.

Finally, 0.2 g of capsules of CdSe nanoparticles in ZrO₂ matrix are collected on a 5 µm pore Nylon filter and stored in a sample vial bottle, under nitrogen.

The closed bottle is then introduced in a vacuum oven -supplied by Heraeus - for 1 hour at 180°C for annealing at a pressure below 1 mbar, finally yielding Capsules C1.

### Example 2: CdSe nanoparticles in ZrO₂ matrix - two-stage reactor - Capsules C2

Dispersion D1 of example 1 is used with a reactor - thereafter named HORIZON, comprising two successive enclosures. In the first enclosure, droplets are injected with a flow rate of dry nitrogen of 2 L/min and dried at a temperature of 150°C for a residence time of 6 s in the first enclosure. Then, the dried droplets are injected in the second enclosure, with the same flow rate of 2.5 L/min of nitrogen, but an additional flow of nitrogen gas of 5 L/min with an absolute humidity of 5% is introduced in the second enclosure, in order to trigger the reaction of zirconium tetra propoxide. Residence time in the second enclosure is 6 s.

Capsules C2 of CdSe nanoparticles in ZrO2 matrix are finally collected.

### Example 3: CdSe/ZnSe/ZnS nanoparticles in ZrO₂ matrix - Single reactor - Capsules C3

Core/shell/shell nanospheres of composition CdSe/ZnSe/ZnS, with a core of diameter 4.5 nm and shell thicknesses of 1.5 nm and 1 nm respectively, and emitting green fluorescent light at wavelength 534 nm upon exposition to UV light are dispersed in cyclohexane at 10 wt%.

Nanoparticles are first evaluated to determine their photoluminescence quantum yield - PLQY. 1 mL of said dispersion is illuminated with a light source at 450 nm with a power of 10 µW/cm². The fluorescent light at 543 nm is measured, allowing to determine PLQY at 80%.

Then, 0.4 mL of said dispersion is mixed with 1.7 mL of zirconium tetra propoxide solution prepared as in example 1 and 19 ml of cyclohexane yielding Dispersion D3. Dispersion D3 comprises 0.2wt% of CdSe nanoparticles, 10.8wt% of zirconium oxide precursor and 89wt% of solvent.

Dispersion D3 is sprayed by a piezo-atomizer at a flow rate of 2 mL/min and flown in a dry nitrogen gas with a flow rate of 2.5 L/min.

Droplets of Dispersion D3 are then introduced in a reactor at a temperature of 150°C for evaporation of cyclohexane from droplets. An additional flow of nitrogen gas of 0.5 L/min and absolute humidity of 5% is introduced in the oven, in order to trigger the reaction of zirconium tetra propoxide. Residence time in the oven is 20 s.

At the exit of the oven, capsules C3 of zirconium oxide comprising CdSe/ZnSe/ZnS nanospheres are collected on a 0.45µm pore PTFE filter.

The capsules are then stored in a sample vial and annealed for 1h at 180°C under vacuum.

PLQY of capsules C3 is measured again at a value of 75%. It is observed that encapsulating the nanoparticles does not reduce significantly their PLQY: nanoparticles are not degraded during encapsulation.

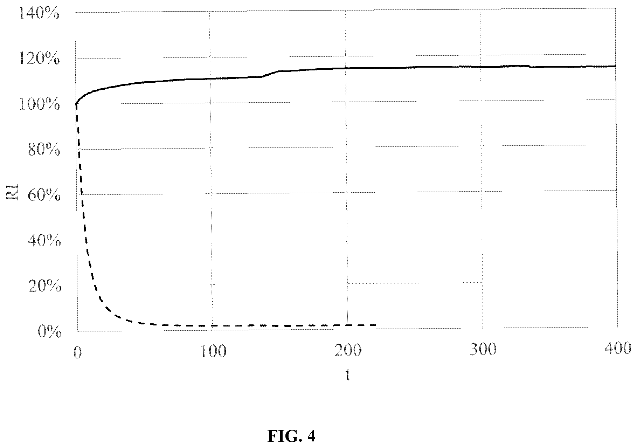

Original CdSe/ZnSe/ZnS nanospheres and capsules C3 are then stored in a cabinet for accelerated ageing, with controlled temperature of 50°C and 90% relative humidity, under constant illumination of 100 mW/cm of 450 nm wavelength blue light. During accelerated ageing test, the power of fluorescent light is measured - continuously or periodically - and shown on figure 4. One can clearly see that encapsulation protects CdSe/ZnSe/ZnS nanospheres against degradation: fluorescent green light remains almost constant - the slight increase is due to drifting of measurement during this very long experience, 400 hours - during test when nanoparticles are encapsulated - solid line.

Density of capsules C3 is measured with a pycnometer Ultrapyc 5000 micro supplied by Anton Parr, using helium gas. Density measure is repeated with 10 different samples, then measurements are averaged, and finally a density of 4.13 g·cm⁻³ is obtained, to be compared to the theoretical density of zirconium oxide of 5.68 g·cm⁻³.

Besides, the residual organic content of capsules C3 is measured by thermogravimetric analysis. The residual organic corresponds to the unreacted propoxide, remaining bound to zirconium metallic centers in the metal oxide matrix. The weight loss at 800°C is measured at 7%.

Last, the specific surface of capsules C3 is measured by BET method - Brunauer-Emmett-Teller - at 2.4 m²/g. This very low value, below 5 m²/g shows that the capsules C3 have a low surface roughness and that they do not have accessible porosity. In other words, the surface of capsules C3 is closed and does not allow gas from the outside to enter the zirconium oxide matrix.

Measures of density, organic content and BET tends to show that the capsules C3 have a dense external layer being an efficient barrier with an internal part less dense, partly unreacted, where CdSe/ZnSe/ZnS nanospheres are dispersed. But optical properties of CdSe/ZnSe/ZnS nanospheres are unaltered after encapsulation in capsules C3.

Other capsules have been prepared according to the parameters disclosed in Table 1 below.

**Table 1**

| | Dispersion | | | | | | | | | | | |
|---|---|---|---|---|---|---|---|---|---|---|---|---|
| Capsules | Nanoparticles | | Metal oxide precursor | | Solvent | Reactor type | Temperature (1^{st} stage / 2^{nd} stage) | Dispersion flow rate | Gas flow rate | Water absolute humidity | Volatile compound vapor pressure | Residence time (1^{st} stage / 2^{nd} stage) |
| | Type (size in nm) | wt% | Type | wt% | | Two-stage/ Single | °C | mL/min | L/min | % | | s |
| C1 | CdSe (5) | 0.25 | Zr ipr | 7.65 | Cyclohexane | Single | 110 | 2 | 60 | 5 | uncontrolled | 300 |
| C2 | CdSe (5) | 0.25 | Zr ipr | 7.65 | Cyclohexane | Two-stage | 150/175 | 2 | 7.5 | 1 | uncontrolled | 6/6 |
| C3 | CdSe/ZnSe/ZnS (4.5/1.5/1) | 0.2 | Zr ipr | 10.8 | Cyclohexane | Single | 150 | 2 | 3 | 1 | uncontrolled | 20 |
| C4 | ZnSe_{0.88}S_{0.12}/ZnS (6/0.9) | 1.2 | Al tbu | 6.4 | Cyclohexane | Two-stage | 140/180 | 2 | 7.5 | 7 | uncontrolled | 5/12 |
| | | | Zr ipr | 9.6 | | | | | | | | |
| C5 | InP/ZnSe/ZnS (2.5/2.75/2.5) | 1.8 | Al tbu | 14.4 | Cyclohexane | Two-stage | 140/180 | 1.4 | 5 | 1 | uncontrolled | 8/20 |
| | | | Zr ipr | 9.6 | | | | | | | | |
| C6 | CdSe_{0.12}S_{0.28}/ZnSe/ZnS (1.2x8/3.5/0.5) | 0.7 | Al tbu | 16 | Cyclohexane | Two-stage | 140/170 | 2 | 5 | 5 | uncontrolled | 7/16 |
| C7 | CdSe/CdS/ZnS (5/1/0.5) | 0.1 | Al tbu | 5.4 | Cyclohexane | Two-stage | 180/110 | 2.5 | 25 | 10 | uncontrolled | 1/1 |
| | | | Zr ipr | 5.4 | | | | | | | | |
| C8 | CdSe/ZnSe/ZnS (4.5/1.5/1) | 0.2 | Zr ipr | 10.8 | Cyclohexane | Two-stage | 210/115 | 2.5 | 25 | 1 | uncontrolled | 1/1 |

Nanoparticles are presented according to their composition and structure, the sizes are given for the elements of structure: single value for a sphere, couple of values for a core/shell sphere... Nanoplates are presented by a couple thickness x large dimension.
- CdSe (5) are nanospheres of diameter 5 nm.
- CdSe/ZnSe/ZnS (4.5/1.5/1) are core/shell/shell nanoparticles with core diameter of 4.5 nm and shell thicknesses of 1.5 nm and 1 nm.
- ZnSe_{0.88}S_{0.12}/ZnS (6/0.9) are core/shell nanoparticles with core diameter of 6 nm and shell thickness of 0.9 nm.
- InP/ZnSe/ZnS (2.5/2.75/2.5) are core/shell/shell nanoparticles with core diameter of 2.5 nm and shell thicknesses of 2.75 nm and 2.5 nm.
- CdSe_{0.72}S_{0.28}/ZnSe/ZnS (1.2x8/3.5/0.5), with a core of thickness 1.2 nm and a lateral dimension, *i.e.,* length or width, greater than 8 nm and shells of thicknesses 3.5 nm and 0.5 nm.
- CdSe/CdS/ZnS (5/1/0.5) are core/shell/shell nanoparticles with core diameter of 5 nm and shell thicknesses of 1 nm and 0.5 nm

Temperature and residence time are given as single values for single-stage reactor and couple of values for the first enclosure and second enclosure respectively for two-stage reactors.

Several single-stage reactors and two-stage reactors with different volumes have been used. Therefore, flow rate and residence times cannot be compared directly in the examples. For instance, the reactor used for the preparation of capsules C3 is much smaller than the reactor used for the preparation of capsules C1.

Gas flow rate is the sum of gas used for dispersion spraying and the gas used for aqueous vapor introduction. Water absolute humidity is given for the whole gas comprised in the reactor.

In all examples, PLQY properties of nanoparticles are maintained after encapsulation, and nanoparticles are not degraded during ageing test.

## Claims

1. A method of encapsulation of nanoparticles in a metal oxide matrix comprising:
• Preparing (100) a dispersion in a non-polar solvent comprising nanoparticles and a metal oxide precursor;
• Spraying (200) said dispersion in a reactor under dry atmosphere to form droplets;
• Evaporating (300) the solvent by heating said droplets;
• Triggering a reaction (400) of the metal oxide precursor with a controlled amount of aqueous vapor in the reactor; and
• Collecting (500) capsules comprising nanoparticles in a metal oxide matrix.

2. The method of encapsulation according to claim **1,** wherein the dispersion comprises
• From 0.1wt% to 15wt% of nanoparticles,
• From 3wt% to 80wt% of metal oxide precursor, and
• From 5wt% to 97wt% of solvent.

3. The method of encapsulation according to claim **1** or **2,** wherein the ratio defined by the mass of nanoparticles divided by the mass metal oxide generated from the metal oxide precursor is in a range from 0.1% to 40%, preferably from 2% to 20%.

4. The method of encapsulation according to any one of claims **1** to **3,** wherein the ratio defined by the mass flow rate of dispersion sprayed divided by the mass flow rate of gas injected for spraying is in a range from 0.1 to 100, preferably from 1 to 50.

5. The method of encapsulation according to any one of claims **1** to **4,** wherein evaporating (300) is performed in a first enclosure, preferably at a temperature in a range from 100°C to 250°C, and triggering a reaction (400) of the metal oxide precursor is performed in a second enclosure, preferably at a temperature in a range from 100°C to 250°C and absolute humidity in a range from 0.5% to 20%.

6. The method of encapsulation according to any one of claims **1** to **4,** wherein evaporating (300) and triggering a reaction (400) are performed in a single enclosure with a residence time in the reactor in a range from 0.1 s to 600 s at a temperature in a range from 100°C to 250°C.

7. The method of encapsulation according to claim **6,** wherein triggering a reaction (400) is performed with absolute humidity in a range from 0.5% to 20%.

8. The method of encapsulation according to claim **6** or **7,** wherein the reaction of the metal oxide precursor releases a volatile compound; and evaporating (300) and triggering a reaction (400) are performed with a partial pressure of said volatile compound less than 50 mbar, preferably less than 5 mbar, more preferably less than 1 mbar.

9. The method of encapsulation according to any one of claims **6** to **8,** wherein evaporating (300) and triggering a reaction (400) are performed under a partial pressure of nitrogen greater than 0.95 Patm.

10. The method of encapsulation according to any one of claims **1** to **9,** further comprising annealing (600) of capsules with an annealing time in a range from 5 min to 300 min at a temperature in a range from 100°C to 250°C.

11. The method of encapsulation according to claim **10,** wherein annealing (600) is performed with absolute humidity in a range from 0.5% to 20%.

12. The method of encapsulation according to claim any one of claims **2** to **11,** wherein the dispersion further comprises processing aids such as ligands, anti-agglomerants, cosolvents, dispersing agent, or mixture thereof.
